# EUROPÄISCHE PATENTSCHRIFT

(11) **EP 1 086 504 B1**
(45) Veröffentlichungstag und Bekanntmachung des Hinweises auf die Patenterteilung: **18.06.2003**
(21) Anmeldenummer: 99919165.3
(22) Anmeldetag: 31.03.1999
(51) Int. Cl.: H01M 8/10, H01M 8/02

(54) **BRENNSTOFFZELLE**
FUEL CELL
CELLULE A COMBUSTIBLE

(30) Priorität: 18.05.1998 DE 19821976
(43) Veröffentlichungstag der Anmeldung: 28.03.2001
(73) Patentinhaber: Carl Freudenberg KG, 69469 Weinheim (DE)
(72) Erfinder: BARTH, Thomas, D-64285 Darmstadt (DE); KASPAR, Klaus, D-77704 Oberkirch (DE); SEVERICH, Birgit, D-64964 Weinheim (DE)
(86) Internationale Anmeldenummer: EP9902201
(87) Internationale Veröffentlichungsnummer: WO99060648

(56) Entgegenhaltungen:
- WO-A-94/09519
- DE-A- 19 544 323
- US-A- 4 759 989
- US-A- 5 292 600

## Beschreibung

### Technisches Gebiet:

Die Erfindung betrifft eine Brennstoffzelle, umfassend ein Gehäuse, zumindest eine protonenleitende, erste Schicht, die beiderseits von Katalysatorschichten überdeckt ist, gasdurchlässige Elektroden auf den Katalysatorschichten und beiderseits der ersten Schichten angeordnete, zweite Schichten in Gestalt elektrisch leitfähiger Platten, die die Elektroden in dicht benachbarten Abständen elektrisch leitend berühren und gemeinsam mit den Elektroden gasführende Kanäle begrenzen, wobei die eine Schicht die andere Schicht mit einer im wesentlichen eben ausgebildeten Oberfläche berührt.

### Stand der Technik

Eine solche Brennstoffzelle ist aus Spektrum der Wissenschaft, Juli 1995, Seite 98, bekannt. Die Kanäle sind dabei parallel zu einander verlaufend in die Bipolarplatten eingeformt. Ihre Herstellung ist dementsprechend aufwendig und teuer. Das hohe Leistungsgewicht der bekannten Brennstoffzeile ist wenig befriedigend.

In Brennstoffzellen wird eine Trennung des ionischen und des elektrischen Weges bei der Reaktion von Wasserstoff und Sauerstoff vorgenommen, um aus der chemische Energie auf direktem Wege elektrische Energie zu gewinnen.

Wesen und Wirkungsweise verschiedener Typen von Brennstoffzellen sind beschrieben von K.-D. Kreuer und J. Maier in "Spektrum der Wissenschaft" (Juli 1995), 92-96.

Die in Brennstoffzellen zur Anwendung gelangenden Elektroden müssen sehr gute Elektronenleiter sein (elektrischer Widerstand um 0,1 Ω cm⁻¹). Sie dürfen außerdem die chemische Reaktion nicht behindern. Sie müssen des weiteren mit dem Elektrolyten und Katalysator verträglich und chemisch und physikalisch inert sein, d.h. sie dürfen unter den stark oxidierenden Bedingungen an der Kathode sowie den stark reduzierenden Bedingungen an der Anode keine unerwünschten Verbindungen miteinander eingehen.

Um mehrere Einzelzellen zu Zellenstapeln zu verschalten, müssen die zwischen der ersten und der zweiten Schicht angeordneten Elektroden eine hinreichende mechanische Belastbarkeit haben. Ferner spielen Material- und Prozeßkosten, Lebensdauer und Umweltverträglichkeit eine wichtige Rolle.

### Darstellung der Erfindung

Der Erfindung liegt die Aufgabe zugrunde, eine Brennstoffzelle der eingangs genannten Art bereitzustellen, die technisch einfacher und kostengünstiger herstellbar ist.

Diese Aufgabe wird erfindungsgemäß bei einer Brennstoffzelle der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Brennstoffzelle ist es vorgesehen, daß die Elektroden durch zumindest eine Lage aus carbonisierten Fasern aus polymerem Werkstoff gebildet sind, die in zumindest einer Richtung von parallel zu ihren Oberflächen verlaufenden Strömungskanälen durchdrungen ist.

Die carbonisierten Fasern berühren einerseits die Katalysatorschichten und andererseits die leitfähigen Platten in sich benachbarten Abständen, was einerseits eine gute Ableitung der während der bestimmungsgemäßen Verwendung freigesetzten Elektronen bewirkt und andererseits eine gute mechanische Abstützung der ersten und der zweiten Schichten durch einander. Die Dicke der ersten und der zweiten Schichten kann dementsprechend reduziert werden, mit der Folge, daß sich im Vergleich zu bekannten Brennstoffzellen eine deutliche Verbesserung des Leistungsgewichts ergibt. Eine sekundäre Folge, die daraus resultiert, besteht in einer Verminderung des je Leistungseinheit benötigten Volumens. In einem vorgegebenen Bauraum lassen sich dadurch mehr Brennstoffzellen unterbringen als bisher, was Verwendungen im Bereich des Kfz-Bereichs begünstigt und die verfügbare Gesamtleistung entsprechend verbessert.

Die erfindungsgemäße Brennstoffzelle weist Vorteile in konstruktiver Hinsicht auf insofern, als es nicht mehr erforderlich ist, die gasführenden Kanäle unter Anwendung spanabhebender Verfahren zu erzeugen und anschließend auf komplizierte Weise abzudichten: bei der erfindungsgemäßen Brennstoffzelle können im einfachsten Falle sämtliche Schichten eben ausgebildet sein, was die Herstellung und Abdichtung wesentlich vereinfacht und den zusätzlichen Vorteil bedingt, daß die erste Schicht nahezu in ihrer Gesamtheit für die Protonenleitung zur Verfügung steht und die zweite Schicht in ihrer Gesamtheit für die Ableitung von Elektronen.

Als vorteilhaft hat es sich bewährt, wenn die die Elektroden bildende Lage aus einem Vliesstoff, einem Gewebe oder einem Gewirk gebildet ist. Die Fasern sollten dabei einen Titer von 10 bis 50 dtex, vorzugsweise von 15 bis 35 dtex haben. Zweckmäßig hat die Lage in ihrer Gesamtheit bei einer Dicke von 1 bis 6 mm ein Flächengewicht von 50 bis 250 g/m².

Die Lage ist ähnlich einer Wellpappe mehrschichtig aufgebaut und zwischen zwei höher verdichteten Deckschichten zumindest eine zentral angeordnete, offen strukturierte Stützschicht haben, um verschiedenen Zwecken in optimaler Weise zu genügen: Der erste dieser Zwecke kann darin bestehen, eine optimale Abstützung der protonenleitenden, ersten Schicht zu bewirken, was eine Berührung in dicht benachbarten Abständen sinnvoll erscheinen läßt. Der zweite darauf, eine optimale Ableitung der während der bestimmungsgemäßen Verwendung erzeugten Elektronen über die leitfähigen Platten zu bewirken und der dritte darauf, eine optimale Beaufschlagung der ersten Schicht mit den während der bestimmungsgemäßen Verwendung benötigten Betriebsgasen unter Vermeidung unnötiger Druckverluste zu gewährleisten, was u.a. eine gute Durchströmbarkeit der Elektroden parallel zu ihren Oberflächen erfordert. Insbesondere eine Ausbildung, bei der die die Stützschicht bildenden Fasern im wesentlichen senkrecht zu den Deckschichten verlaufend angeordnet sind, wird diesen Zwecken in besonders guter Weise gerecht. Sie können auch im Zuge von Kanäle begrenzenden Gassen angeordnet und beispielsweise durch Kettstichnähte oder durch separat erzeugte Wendel gebildet sein, die in den Zwischenraum zwischen den Deckschichten eingefügt und damit gegebenenfalls verbunden sind. Die die Elektroden bildenden Fasern bestehen bevorzugt aus einem elektrisch leitfähigen, polymeren Werkstoff, wie zum Beispiel carbonisiertem Polyacrylnitril oder Pech. Die Verwendung von Metallen ist ebenfalls möglich. Die Fasern können im Bereich der Deckschichten einen geringeren Durchmesser haben als im Bereich der Stützschicht, um bei möglichst geringer Beeinträchtigung der Durchströmbarkeit eine optimale Elektronenleitung zu erzielen.

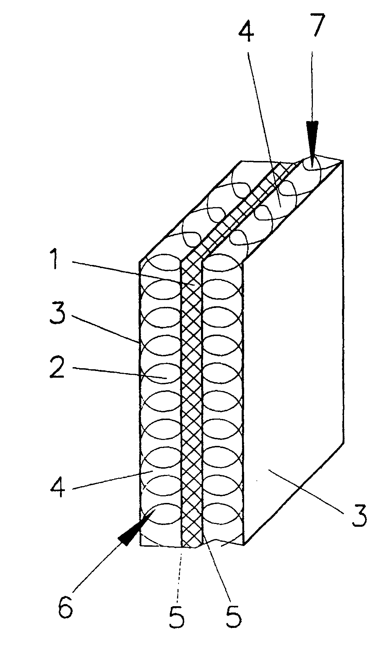

Die Erfindung wird nachfolgend anhand der Zeichnung weiter verdeutlicht.

In der Zeichnung ist eine Brennstoffzelle in perspektivischer Ansicht von oben wiedergegeben, wobei das Gehäuse aus Gründen der verbesserten Anschaulichkeit weggelassen worden ist. Die Brennstoffzelle umfaßt eine protonenleitende, erste Schicht 1, die beiderseits von Katalysatorschichten 5 überdeckt ist. An der nach außen weisenden Oberflächen der Katalysatorschichten 5 liegen gasdurchlässige Elektroden 2 an, die auf der von den Katalysatorschichten 5 abgewandten Seite zweite Schichten 3 in Gestalt elektrisch leitfähiger Platten berühren.

Die erste Schicht kann insgesamt aus einem protonenleitenden, polymeren Werkstoff bestehen, jedoch auch aus einer porösen Folie, einem Gewebe oder Gewirke oder einem Vliesstoff aus Kurz- oder Endlosfasern, der bis zur Sättigung mit perfluoriertem lonomer gefüllt ist, wobei das perfluorierte lonomer ein Polytetrafluorethylen mit sulfonierten Perfluorvlnylether-Seitenketten sein kann. Als Alternative bietet es sich an, den Mikrofaservliesstoff mit ein- bis 5-molarer, wässriger Schwefelsäurelösung oder mit konzentrierter Phosphorsäure zu tränken. Des weiteren ist es möglich, hydratisiertes Zirkoniumphosphat oder Ammoniumdihydrogenphosphat zu verwenden.

Mit abnehmender Dicke der ersten Schicht läßt sich eine Verbesserung des Wirkungsgrades der Brennstoffzelle erzielen. Unter diesem Gesichtspunkt hat es sich als vorteilhaft bewährt, wenn ein in der ersten Schicht enthaltener Vliesstoff aus Microfasern, Filmfibrillen oder Microfilamenten besteht. Die Verwendung von porösen Folien ist jedoch ebenfalls möglich. Als Werkstoffe haben sich insbesondere PTFE und Polysulfon bewährt.

Bei Verwendung eines Mikrofaser-Vliesstoffs als Protonenleiter ist es vorgesehen, daß dieser mit einem Elektrolyten bis zur Sättigung getränkt ist; wobei der Mikrofaser-Vliesstoff bei Temperaturen bis zu +200 °C sowie unter oxidierenden und reduzierenden Bedingungen chemisch inert gegenüber dem Elektrolyten ist, wobei das Gewicht des Mikrofaser-Vliestoffs 20 bis 200 g/m² beträgt; wobei die Vliesstoffdicke maximal 1 mm beträgt und wobei das Porenvolumen: 65 bis 92 % beträgt.

Der mittlere Porenradius des Mikrofaser-Vliesstoffs soll 20 nm bis 10 um betragen.

Die zweiten Schichten 3 sind von ebener Gestalt. Sie werden durch Blechplatten gebildet.

Zwischen den die erste Schicht beiderseits bedeckenden Katalysatorschichten 5 und den die zweiten Schichten 3 bildenden Blechplatten sind die Elektroden 2 angeordnet, welche durch jeweils eine Lage aus carbonisierten Fasern aus Polyacrylnitril gebildet sind, die in mehreren Richtungen von parallel zu ihren Oberflächen verlaufenden Kanälen 4 durchdrungen sind. Die Lagen bestehen aus Vliesstoffen aus carbonisierten Polyacrylnitrilfasern eines Titers von 35 dtex. Sie haben eine Dicke von 4 mm und ein Flächengewicht von 180 g/m². Beide Lagen sind mehrschichtig aufgebaut und umfassen zwischen zwei höher verdichteten Deckschichten jeweils eine offen strukturierte Stützschicht, deren Fasern im wesentlichen senkrecht zu den Deckschichten verlaufend angeordnet sind. Die während der bestimmungsgemäßen Verwendung durchgeleiteten Betriebsgase können die Kanäle dadurch unter Vermeidung von nennenswerten Druckverlusten passieren. Die sich quer zur Strömungsrichtung erstreckenden Fasern bewirken gleichwohl eine gewisse Durchwirbelung der Betriebsgase, wodurch unverbrauchte Gasanteile immer wieder aufs neue in Verbindung mit der ersten Schicht 1 bzw. den diese abdeckenden Katalysatorschichten 5 gelangen. Für die Erzielung einer guten Energieausbeute ist das von großem Vorteil.

Die in den beiden Lagen enthaltenen Schichten sind untrennbar verbunden, was die Konfektionierung stark erleichtert. Analog zu der ersten Schicht 1 und den dritten Schichten 3 sind die Lagen eben gestaltet und derart in die Zwischenräume zwischen der ersten Schicht 1 und den dritten Schichten 3 eingefügt, daß sich eine elektrisch leitende Verbindung zwischen beiden ergibt. Die Einfügung sämtlicher Schichten in das aufnehmende, in der Zeichnung nicht wiedergegebene Gehäuse muß so vorgenommen werden, daß die während der bestimmungsgemäßen Verwendung durch die einzelnen Lagen hindurchgeführten Reaktionsgase 6, 7 nur nach Reaktion an der Katalysatoroberfläche durch die Schicht 1 aus protonenleitendem, polymerem Werkstoff hindurch miteinander in Verbindung gelangen können, nicht hingegen auf direktem Wege. Die erste Schicht 1 und die dritten Schichten 3 können zu diesem Zwecke die Elektroden 2 in sämtlichen Richtungen im Bereich schmaler Randstreifen seitlich übergreifen, die von Dichtleisten des Gehäuses erfaßt und auf solche Weise abgedichtet werden. Bei verhältnismäßig geringem Aufwand in konstruktiver Hinsicht läßt sich hierdurch ausschließen, daß die Betriebsgase 6, 7 unter Umgehung der ersten Schicht 1 in unmittelbarer Berührung miteinander und zur Reaktion gelangen können. Unter sicherheitstechnischen Gesichtspunkten ist das von großen Vorteil.

Die erfindungsgemäße Brennstoffzelle zeichnet sich bei einfachem Aufbau und kostengünstiger Verfügbarkeit durch eine besonders gute Betriebssicherheit und ein günstiges Leistungsgewicht aus. Für Anwendungen im Bereich der Kfz-Technik ist dies von hohem Vorteil.

## Patentansprüche

1. Brennstoffzelle, umfassend ein Gehäuse, zumindest eine protonenleitende, erste Schicht (1), die beiderseits von Katalysatorschichten (5) überdeckt ist, gasdurchlässige Elektroden (2) auf den Katalysatorschichten (5) und beiderseits der ersten Schichten (1) angeordnete, zweite Schichten (3) in Gestalt elektrisch leitfähiger Platten, die die Elektroden (2) in dicht benachbarten Abständen elektrisch leitend berühren und gemeinsam mit den Elektroden (2) gasführende Kanäle (4) begrenzen, wobei die erste Schicht (1) oder die zweite Schicht (3) eine im wesentlichen eben ausgebildete Oberfläche aufweisen und wobei die Elektroden (2) durch zumindest eine Lage aus **carbonisierten**, elektrisch leitfähigen Fasern aus polymerem Werkstoff gebildet sind, die in zumindest einer Richtung von parallel zu ihren Oberflächen verlaufenden Strömungskanälen durchdrungen ist, **dadurch gekennzeichnet, dass** die Lage mehrschichtig aufgebaut und zwischen zwei höher verdichteten Deckschichten zumindest eine offen strukturierte Stützschicht umfasst.

2. Brennstoffzelle nach Anspruch 1, **dadurch gekennzeichnet, dass** die Lage aus einem Vliesstoff, einem Gewebe oder einem Gewirk gebildet ist.

3. Brennstoffzelle nach Anspruch 1 oder 2, **dadurch gekennzeichnet, dass** Fasern einen Titer von 10 bis 50 dtex haben.

4. Brennstoffzelle nach einem der Ansprüche 1 bis 3, bei der die Lage aus polymeren Fasern besteht, **dadurch gekennzeichnet, dass** die Lage bei einer Dicke von 2 bis 6 mm ein Flächengewicht von 50 bis 250 g/m2 hat.

5. Brennstoffzelle nach einem der Ansprüche 1 bis 4 **dadurch gekennzeichnet, dass** die die Stützschicht bildenden Fasern im wesentlichen senkrecht zu den Deckschichten verlaufend angeordnet sind.

6. Brennstoffzelle nach Anspruch 5, **dadurch gekennzeichnet, dass** die Fasern im Zuge von Kanälen begrenzenden Gasen angeordnet sind.

7. Brennstoffzelle nach einem der Ansprüche 1 bis 6, **dadurch gekennzeichnet, dass** in der Lage Fasern aus carbonisiertern Polyacrylnitril, Metall undloder Pech enthalten sind.

## Claims

1. A fuel cell comprising a housing, at least one proton-conducting first layer (1) which is covered on both sides by catalyst layers (5), gas-pervious electrodes (2) on the catalyst layers (5) and, disposed on both sides of the first layers (1), second layers (3) in the form of electroconductive plates which electroconductingly touch the electrodes (2) at closely spaced intervals and together with the electrodes (2) define gas-conducting channels (4), the first layer (1) or the second layer (3) having a substantially planar surface and the electrodes (2) being formed by at least one ply of carbonized electroconductive polymeric fibres which is penetrated in one or more directions by flow channels which extend parallel to its surfaces, **characterized in that** the ply has a multilayered construction and comprises at least one openly structured supporting layer between two relatively highly compacted covering layers.

2. A fuel cell according to claim 1, **characterized in that** the ply is formed of a nonwoven fabric, a woven fabric or a loop-formingly knitted fabric.

3. A fuel cell according to claim 1 or 2, **characterized in that** the fibres are from 10 to 50 dtex in linear density.

4. A fuel cell according to any one of claims 1 to 3 where the ply is composed of polymeric fibres, **characterized in that** the ply is from 2 to 6 mm in thickness and from 50 to 250 g/m² in basis weight.

5. A fuel cell according to any one of claims 1 to 4, **characterized in that** the fibres forming the supporting layer are arranged to extend substantially perpendicularly to the covering layers.

6. A fuel cell according to claim 5, **characterized in that** the fibres are arranged in the form of lanes which define channels.

7. A fuel cell according to any one of claims 1 to 6, **characterized in that** the ply comprises fibres of carbonized polyacrylonitrile, metal and/or pitch.

## Revendications

1. Pile à combustible, comprenant un boîtier, au moins une première couche (1) conductrice de protons, qui est recouverte des deux côtés par des couches de catalyseur (5), des électrodes (2) perméables aux gaz sur les couches de catalyseur (5) et des deuxièmes couches (3) disposées des deux côtés des premières couches (1) sous la forme de plaques conductrices d'électricité, qui viennent en contact électrique avec les électrodes (2) à des distances voisines toutes proches et qui conjointement avec les électrodes (2) délimitent des conduites (4) conduisant les gaz, la première couche (1) ou la deuxième couche (3) présentant une surface formée de façon essentiellement plane, et les électrodes (2) étant formées par au moins une couche constituée de fibres en matériau polymère, carbonisées, conductrices de l'électricité, laquelle est pénétrée dans au moins une direction par des conduites d'écoulement se prolongeant parallèlement à leurs surfaces, **caractérisée en ce que** la couche est construite en plusieurs couches et comprend au moins une couche support à structure ouverte entre deux couches de recouvrement plus compactées.

2. Pile à combustible selon la revendication 1, **caractérisée en ce que** la couche est formée d'un non-tissé, d'un tissu ou d'un tricot.

3. Pile à combustible selon la revendication 1 ou 2, **caractérisée en ce que** les fibres possèdent un titre de 10 à 50 dtex.

4. Pile à combustible selon l'une quelconque des revendications 1 à 3, dans laquelle la couche est constituée de fibres polymères, **caractérisée en ce que** la couche présente un grammage de 50 à 250 g/m² pour une épaisseur de 2 à 6 mm.

5. Pile à combustible selon l'une quelconque des revendications 1 à 4, **caractérisée en ce que** les fibres formant la couche support sont disposées en se prolongeant essentiellement perpendiculairement aux couches de recouvrement.

6. Pile à combustible selon la revendication 5, **caractérisée en ce que** les fibres sont disposées dans la direction de voies limitant des conduites.

7. Pile à combustible selon l'une quelconque des revendications 1 à 6, **caractérisée en ce que** des fibres constituées de polyacrylonitrile carbonisé, de métal et/ou de poix sont contenues dans la couche.
